# EUROPEAN PATENT APPLICATION

(11) **EP 4 819 256 A1**
(43) Date of publication of application: **07.10.2026**
(21) Application number: 26166994.9
(22) Date of filing: 24.03.2026
(51) Int. Cl.: H01M 8/04007, H01M 8/04746, H01M 8/2404, H01M 8/2485, H01M 8/241, H01M 8/2465, H01M 8/2475, H01M 8/249, H01M 8/2483

(54) **FUEL CELL DEVICE**

(30) Priority: 03.04.2025 JP 2025061644
(71) Applicant: Toyota Jidosha Kabushiki Kaisha, Toyota-shi, Aichi-ken 471-8571 (JP)
(72) Inventor: TAKEUCHI, Yusuke, Toyota-shi, Aichi-ken 471-8571 (JP)
(74) Representative: TBK

(57) **Abstract**

A fuel cell device comprises: a stack including a plurality of fuel cells stacked in a stacking direction; a case housing the stack and including a case one end portion, the case one end portion being formed at one end side in the stacking direction and forming an opening; and a lid member formed with a through hole for flow of a fluid to be supplied to the stack, the lid member being fastened to the case one end portion in such a way as to cover the opening. The lid member includes a resin part and a metal part. The metal part is in contact with the case one end portion.

## Description

### BACKGROUND

### FIELD

The present disclosure relates to a technique concerning a fuel cell device.

### RELATED ART

According to a technique conventionally known, a fuel cell device includes a case housing a fuel cell stack, and a distribution manifold (lid member) fastened to the case at one end portion of the case in such a way as to close an opening of the case (Japanese Patent Application Publication No. 2005-149839, for example). The distribution manifold has an opening for flow of a gas or a cooling medium to be supplied to the fuel cell stack or for flow of the gas or the cooling medium having passed through the fuel cell stack.

According to the conventional technique, the distribution manifold may be composed of a resin member. When the fuel cell device is in operation, gases such as a fuel gas and an oxidizing gas, and a coolant are supplied to the fuel cell stack. This may cause swelling of the fuel cell stack. The swelling of the fuel cell stack may further cause deformation of the distribution manifold located at the end portion of the fuel cell stack. The deformation of the distribution manifold might cause a gap between the case and the distribution manifold. The occurrence of the gap between the case and the distribution manifold may result in entry of water or the like through the gap. Therefore, there isa desire for a technique concerning the fuel cell device capable of decreasing the likelihood of the occurrence of the gap between the case and the distribution manifold.

### SUMMARY

The present disclosure is feasible in the following aspects.
(1) According to one aspect of the present disclosure, a fuel cell device is provided. The fuel cell device comprises: a stack including a plurality of fuel cells stacked in a stacking direction; a case housing the stack and including a case one end portion, the case one end portion being formed at one end side in the stacking direction and forming an opening; and a lid member formed with a through hole for flow of a fluid to be supplied to the stack, the lid member being fastened to the case one end portion in such a way as to cover the opening. The lid member includes a resin part and a metal part. The metal part is in contact with the case one end portion. According to this aspect, the metal part of the lid member is in contact with the case one end portion of the case. Thus, even if the stack is deformed by swelling or the like, it is still possible for the metal part to be less prone to deformation. This allows reduction in the occurrence of a gap between the case one end portion and the metal part, making it possible to decrease the likelihood of entry of water or the like into the interior of the case from outside.
(2) In the above aspect, the metal part may include a peripheral part located in a periphery of the resin part in such a way as to surround the resin part in a plan view of the lid member, and a contact part of contact between the case one end portion and the metal part may have a width equal to or greater than a preset value. According to this aspect, the case one end portion and the metal part are allowed to come into contact with each other at the width equal to or greater than the preset value. This makes it possible to further reduce the occurrence of a gap between the case one end portion and the metal part.
(3) In the above aspect, the fuel cell device may further comprise an insulating sheet located between the plurality of fuel cells and the case. The case one end portion may include: a case facing surface in contact with the metal part; a case one end inner surface connected to the case facing surface and forming a part of an inner peripheral surface of the case; and a recess formed at the case one end inner surface and used for positioning of the insulating sheet in the case.
(4) In the above aspect, the case may be made of metal. According to this aspect, the case becomes more rigid to allow the case itself to be less prone to deformation. Thus, it becomes possible to make the metal part even less prone to deformation.

The present disclosure is feasible in various aspects. In addition to the fuel cell device described above, the present disclosure may be realized in aspects such as a method of manufacturing the fuel cell device, for example.

### BRIEF DESCRIPTION OF THE DRAWINGS

Fig. 1 is a sectional view showing a schematic configuration of a fuel cell device according to one embodiment of the present disclosure;
Fig. 2 is a schematic view of a case and a lid member;
Fig. 3 is a sectional view showing the configuration of the fuel cell device in an enlarged manner on the side of the lid member in Fig. 1; and
Fig. 4 is a perspective view schematically showing a side including a case one end portion of the case.

### DETAILED DESCRIPTION

### A. Embodiment:

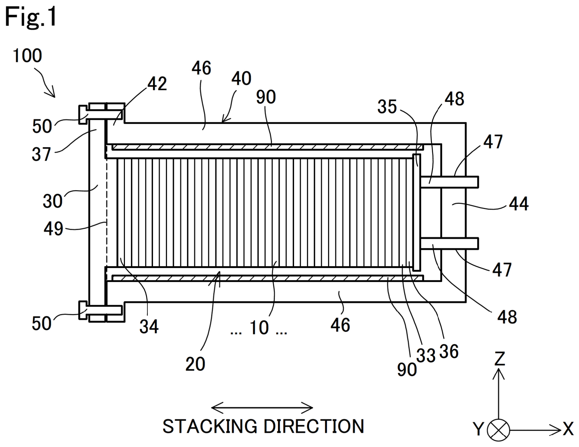

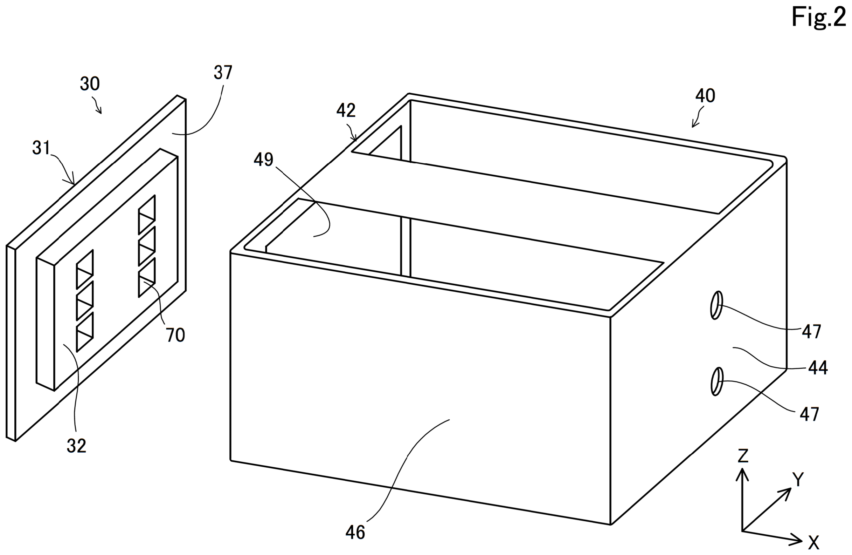

Fig. 1 is a sectional view showing a schematic configuration of a fuel cell device 100 according to one embodiment of the present disclosure. Fig. 2 is a schematic view of a case 40 and a lid member 30. Fig. 1 shows a section along a stacking direction of the fuel cell device 100. In Fig. 1, a Z axis is parallel to a vertical direction, and an X axis and a Y axis are parallel to a horizontal direction. A +Z direction is a vertically-upward direction, and a -Z direction is a vertically-downward direction. The direction of stacking a plurality of fuel cells 10 is parallel to the X axis. The X axis, the Y axis, and the Z axis in Fig. 1 are further shown in other drawings, as necessary.

The fuel cell device 100 includes a stack 20, a lid member 30 further functioning as an end plate and an insulator, the case 40, a plurality of bolts 50, and an insulating sheet 90. The stack 20 has a configuration including the plurality of fuel cells 10 stacked along the stacking direction. More specifically, the stack 20 includes the plurality of fuel cells 10, terminal plates 33 and 34 in a pair, an insulator 36, and an end plate 35. The terminal plates 33 and 34 in a pair are located on opposite sides of the direction in which the fuel cells 10 are stacked. The fuel cell 10 is a solid polymer fuel cell. The fuel cell 10 generates electricity by causing electrochemical reaction using reaction gases supplied to an anode-side catalyst electrode layer and a cathode-side catalyst electrode layer arranged with a solid polymer electrolyte membrane held therebetween. In each fuel cell 10, a gas diffusion layer composed of a carbon porous body such as carbon paper and carbon cloth, for example, is arranged external to the catalyst electrode layer of each polarity. A separator having electrical conductivity is arranged external to the gas diffusion layer of each polarity. The fuel cell device 100 includes a plurality of manifolds therein formed parallel to the stacking direction for supplying the reaction gases to each fuel cell 10, discharging an off-gas from each fuel cell 10, and supplying and discharging a cooling medium to and from each fuel cell 10.

The case 40 has a substantially rectangular solid shape and houses the stack 20. The case 40 includes a case one end portion 42 formed at one end side corresponding to a -X direction side of the stacking direction, a case other end portion 44 formed at the other end side corresponding to a +X direction side of the stacking direction, and a peripheral wall 46 shown in Fig. 2. The peripheral wall 46 is composed of four walls surrounding the stack 20 with respect to the stacking direction as a center. The four walls are a bottom wall, an upper wall, and two side walls. The case 40 is made of metal. In the present embodiment, the case 40 is made of an aluminum alloy having excellent water resistance, dust resistance, and impact resistance.

As shown in Figs. 1 and 2, the case one end portion 42 forms a rectangular opening 49. The stack 20 and the insulating sheet 90 described later are placed into the case 40 via the opening 49. The case other end portion 44 faces the end plate 35. The case other end portion 44 is formed with a shaft hole 47 through which a shaft 48 is inserted. The shaft 48 is hermetically inserted through the shaft hole 47. By pressing the end plate 35 with the shaft 48 toward the -X direction, load on the stack 20 in the stacking direction is adjusted.

As shown in Fig. 1, the lid member 30 is fastened to the case one end portion 42 in such a way as to cover the opening 49 of the case one end portion 42. The lid member 30 is fastened to the case one end portion 42 with the plurality of bolts 50 as fastening members. The lid member 30 is in contact with the case one end portion 42 along its entire perimeter in a peripheral direction with respect to the stacking direction as a center.

As shown in Fig. 2, the lid member 30 has a plurality of through holes 70 for flow of a gas or a fluid of a cooling medium to be supplied to the stack 20, and flow of the gas (off-gas) and the fluid as the cooling medium having passed through the stack 20. These through holes 70 penetrate the lid member 30 in the stacking direction. The number of the through holes 70 is six. The through holes 70 may be holes for flow of a fuel gas or a fuel off-gas, holes for flow of an oxidizing gas or an oxidizing off-gas, and holes for flow of the cooling medium to be supplied or discharged.

The lid member 30 includes a metal part 31 and a resin part 32. The metal part 31 is a plate-like member made of metal. The metal part 31 is more rigid than the resin part 32. In the present embodiment, the metal part 31 is made of an aluminum alloy. The metal part 31 may be made of an arbitrary metal such as a titanium alloy or stainless steel instead of an aluminum alloy. The resin part 32 is a layer formed on the metal part 31. The resin part 32 is formed on a surface of the metal part 31 in an area where the through holes 70 are defined and on a surface of the metal part 31 in an area in contact with and facing the terminal plate 34 in the stacking direction. The resin part 32 is a member having insulating property and anticorrosive property. As an example, the resin part 32 is made of an insulating polymer material that is polyolefin such as polypropylene (PP), etc., or engineering plastic such as polyamide (PA) or polyphenylene sulfide (PPS). Aromatic polyamide or polyphenylene sulfide (PPS) is available as a preferred material of the resin part 32. The metal part 31 includes a peripheral part 37 located in a periphery of the resin part 32 in such a way as to surround the resin part 32 in a plan view of the lid member 30 viewed along a direction conforming to the stacking direction. As shown in Fig. 1, with the peripheral part 37 of the metal part 31 in hermetic contact with the case one end portion 42, the lid member 30 is mounted on the case 40 with the bolt 50. The case one end portion 42 and the lid member 30 will be described later in detail.

The insulating sheet 90 shown in Fig. 1 is arranged between the stack 20 and the peripheral wall 46 of the case 40. In the present embodiment, the insulating sheet 90 is arranged on the peripheral wall 46, namely, on the upper wall, the bottom wall, and the two side walls of the case 40. The insulating sheet 90 is a member for insulating the stack 20 and the case 40 from each other. The insulating sheet 90 is made of an electrically-insulating organic material such as resin or rubber, for example. A buffer member such as a foamed member for absorbing impact may be provided between the insulating sheet 90 and the case 40.

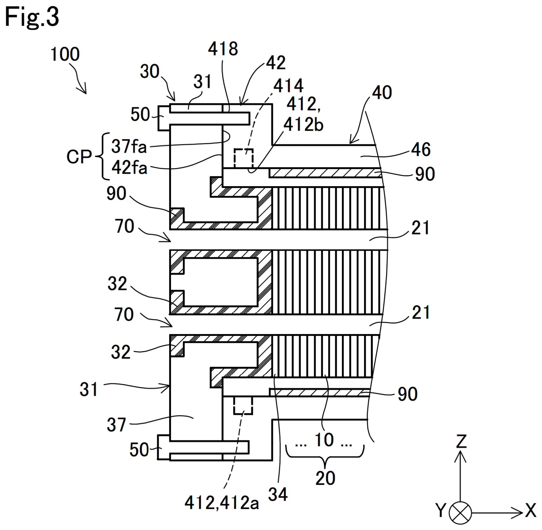

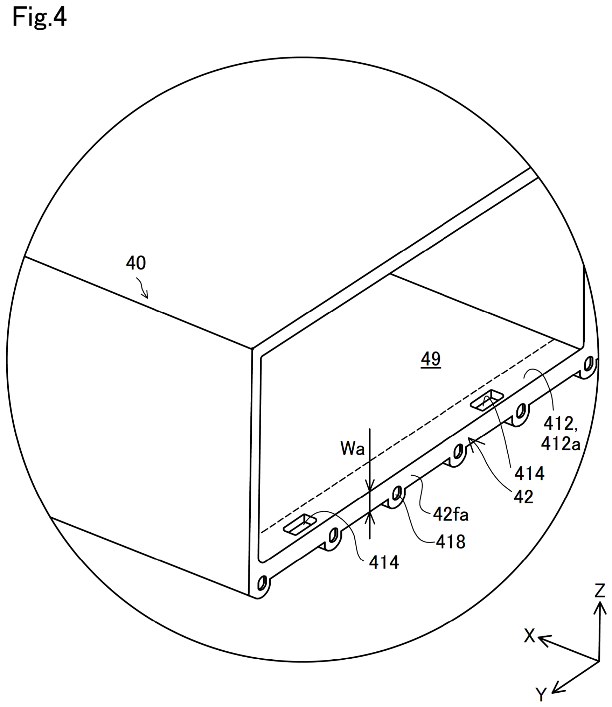

Fig. 3 is a sectional view showing the configuration of the fuel cell device 100 in an enlarged manner on the side of the lid member 30 in Fig. 1. Fig. 4 is a perspective view schematically showing a side including the case one end portion 42 of the case 40. As shown in Fig. 3, the resin part 32 is formed on the surface of the metal part 31 in the area where the through holes 70 are defined and on the surface of the metal part 31 in the area in contact with and facing the terminal plate 34. A case facing surface 42fa is formed with an insertion hole 418 through which the bolt 50 is inserted.

As shown in Fig. 3, the through hole 70 communicates with a manifold 21 formed in the stack 20. The manifold 21 is a supply flow path or a discharge flow path for an oxidizing gas, a fuel gas, or a cooling medium.

While a contact state is established between a lid facing surface 37fa of the peripheral part 37 on a side facing the case 40 and the case facing surface 42fa of the case one end portion 42 on a side facing the peripheral part 37, the metal part 31 and the case one end portion 42 are fixed to each other with the bolt 50. The resin part 32 is not in contact with the case facing surface 42fa of the case one end portion 42. The case one end portion 42 is a portion projecting more externally than the peripheral wall 46 in a plan view connecting the case one end portion 42 and the case other end portion 44 to each other. A contact part CP of contact between the case facing surface 42fa of the case one end portion 42 and the lid facing surface 37fa of the metal part 31 has a width Wa equal to or greater than a preset value. The preset value is preferably set to such a value as will allow ensuring of a contact area of the contact part CP necessary for hermetic sealing between the case 40 and the lid member 30. An annular seal member may be provided between the case facing surface 42fa and the lid facing surface 37fa. The annular seal member may be located in a groove formed in either the case facing surface 42fa or the lid facing surface 37fa.

As shown in Figs. 3 and 4, the case one end portion 42 has a case one end inner surface 412 in addition to the case facing surface 42fa in contact with the metal part 31. The case one end inner surface 412 is connected to the case facing surface 42fa and forms a part of an inner peripheral surface of the case 40. The case one end inner surface 412 is a part belonging to the case one end portion 42 and forming the inner peripheral surface of the case 40. The case one end inner surface 412 has a surface 412a closer to the -Z direction and a surface 412b closer to the +Z direction, and each of the surfaces 412a and 412b is formed with a recess 414. Two recesses 414 are formed at the surface 412a, and two recesses 414 are formed at the surface 412b. The two recesses 414 at each of the surfaces 412a and 412b are formed at an interval therebetween in the Y direction. The two recesses 414 at the surfaces 412a and the two recesses 414 at the surface 412b are located at positions facing each other in the Z direction. In placing the insulating sheet 90 into a predetermined position in the case 40, the recess 414 is used for positioning of the insulating sheet 90 in the case 40. More specifically, a pin as a mark for the positioning is placed in the recess 414. Using the pin in the recess 414 as a mark for the positioning, the insulating sheet 90 is placed with a jig into the predetermined position in the case 40. After the insulating sheet 90 is placed in the predetermined position in the case 40, the pin is removed from the recess 414.

According to the above embodiment, the metal part 31 of the lid member 30 is in contact with the case one end portion 42 of the case 40. Thus, even if the stack 20 is deformed by swelling or the like, the metal part 31 more rigid than the resin part 32 is still possible to be less prone to deformation. This allows reduction in the occurrence of a gap between the case one end portion 42 and the metal part 31, making it possible to decrease the likelihood of entry of water or the like into the case 40 from outside. According to the above embodiment, by bringing the case one end portion 42 and the metal part 31 into contact with each other at the width Wa equal to or greater than the preset value, it becomes possible to further reduce the occurrence of a gap between the case one end portion 42 and the metal part 31. Providing the contact part CP with the width Wa equal to or greater than the preset value makes it possible to ensure a region (depth, for example) for forming the recess 414 shown in Fig. 4. Moreover, using the recess 414 allows the insulating sheet 90 to be positioned easily relative to the case 40. According to the above embodiment, the case 40 is made of metal. This allows the case 40 to be more rigid than in a case where the case 40 is made of resin. This allows the case 40 itself to be less prone to deformation, allowing the metal part 31 to be even less prone to deformation. Thus, it is possible to further decrease the likelihood of the occurrence of a gap between the case 40 and the metal part 31. Furthermore, according to the above embodiment, by making the metal part 31 less prone to deformation, it becomes possible to reduce application of fluctuating load on the bolt 50 for fastening between the metal part 31 and the case 40. This achieves decrease in the likelihood of fatigue failure of the bolt 50.

The present disclosure is not limited to the embodiment described above and is able to be realized with various configurations without departing from the spirit thereof. For example, technical features in the embodiment corresponding to the technical features in the aspects described in the section of SUMMARY are able to be replaced with each other or combined together, as appropriate, in order to solve part or the whole of the problems described previously or to achieve part or the whole of the effects described previously. When the technical features are not described as essential features in the present specification, they are able to be deleted, as appropriate.

## Claims

1. A fuel cell device (100) comprising:
a stack (20) including a plurality of fuel cells stacked in a stacking direction;
a case housing the stack and including a case one end portion (42), the case one end portion (42) being formed at one end side in the stacking direction and forming an opening (49); and
a lid member (30) formed with a through hole (70) for flow of a fluid to be supplied to the stack (20), the lid member (30) being fastened to the case one end portion (42) in such a way as to cover the opening (49), wherein
the lid member (30) includes a resin part (32) and a metal part (31), and
the metal part (31) is in contact with the case one end portion (42).

2. The fuel cell device (100) according to claim 1, wherein
the metal part (31) includes a peripheral part (37) located in a periphery of the resin part (32) in such a way as to surround the resin part (32) in a plan view of the lid member (30), and
a contact part (CP) of contact between the case one end portion (42) and the metal part (31) has a width (Wa) equal to or greater than a preset value.

3. The fuel cell device (100) according to claim 2, further comprising:
an insulating sheet (90) located between the plurality of fuel cells (10) and the case (40), wherein
the case one end portion (42) includes:
a case facing surface (42fa) in contact with the metal part (31);
a case one end inner surface (412) connected to the case facing surface (42fa) and forming a part of an inner peripheral surface of the case (40); and
a recess (414) formed at the case one end inner surface (412) and used for positioning of the insulating sheet (90) in the case (40).

4. The fuel cell device (100) according to claim 1, wherein
the case (40) is made of metal.
